# EUROPEAN PATENT APPLICATION

(11) **EP 4 557 062 A1**
(43) Date of publication of application: **21.05.2025**
(21) Application number: 23863344.0
(22) Date of filing: 26.07.2023
(51) Int. Cl.: G06F 3/041, G06F 3/046

(54) **COMPUTING DEVICE AND METHOD FOR CONTROLLING TARGET DEVICE**

(30) Priority: 06.09.2022 KR 20220112987
(71) Applicant: Samsung Electronics Co., Ltd., Suwon-si, Gyeonggi-do 16677 (KR)
(72) Inventor: NGO, Hong Thai, Suwong-si, Gyeonggi-do, 16677 (KR); NGUYEN, Duc Vuong, Suwong-si, Gyeonggi-do, 16677 (KR); NGUYEN, Van Khanh, Suwong-si, Gyeonggi-do, 16677 (KR); PHAN, Trung Kien, Suwong-si, Gyeonggi-do, 16677 (VN)
(74) Representative: Gulde & Partner
(86) International application number: PCT/KR2023/010861
(87) International publication number: WO 2024/053863

(57) **Abstract**

A method of controlling a target device by a computing device may include identifying a distance difference between a distance to a first reference device and a distance to a second reference device from one or more electronic devices, identifying an angle difference between an angle of arrival of the one or more electronic devices to at least one of the first reference device or the second reference device and a reference angle of arrival, and controlling the target device based on at least one of the distance difference or the angle difference.

## Description

### Technical Field

The present application relates to a method and a computing device for controlling a target device.

### Background Art

With the development of wireless communication technologies and voice recognition technologies, an Internet of things (IoT) system that supports controlling operation of a device with a voice command of the user is being used in various areas. For example, the user may control home appliances by uttering voice commands through e.g., a virtual assistant service in a home IoT system. In this case, the user needs to provide identification information of an electronic device to the system to control the electronic device. In other words, the user needs to utter a voice command including the identification information of the electronic device to be controlled.

In the meantime, there may be many electronic devices in the IoT system that may be controlled by the user's voice commands. In this case, the user needs to remember all pieces of identification information of the multiple electronic devices to control the multiple electronic devices. Furthermore, to control an electronic device, the user needs to utter a long voice command that includes identification information of the electronic device. Moreover, a new user (e.g., a guest user) who visits the IoT system space is not aware of the identification information of the electronic devices included in the IoT system.

### Disclosure of Invention

### Solution to Problem

The present disclosure may be implemented in various ways including a method, a system, a device, or a computer program stored in a computer-readable storage medium.

According to an embodiment of the present disclosure, a method of controlling a target device by a computing device may include identifying a distance difference between a distance to a first reference device and a distance to a second reference device from one or more electronic devices. In an embodiment of the present disclosure, the method may include identifying an angle difference between an angle of arrival of the one or more electronic devices to at least one of the first reference device or the second reference device and a reference angle of arrival. In an embodiment of the present disclosure, the method may include controlling the target device based on at least one of the distance difference or the angle difference.

According to an embodiment of the present disclosure, a computing device for controlling a target device may include a memory storing one or more instructions and at least one processor configured to execute the one or more instructions stored in the memory. In an embodiment of the present disclosure, the at least one processor may be configured to execute the one or more instructions to identify a distance difference between a distance to a first reference device and a distance to a second reference device from one or more electronic devices. In an embodiment of the present disclosure, the at least one processor may be configured to execute the one or more instructions to identify an angle difference between an angle of arrival of the one or more electronic devices to at least one of the first reference device or the second reference device and a reference angle of arrival. In an embodiment of the present disclosure, the at least one processor may be configured to execute the one or more instructions to control the target device based on at least one of the distance difference or the angle difference.

According to an embodiment of the present disclosure, a program for performing a method of controlling a target device in a computer may be recorded on a computer-readable recording medium.

### Brief Description of Drawings

FIG. 1 is a diagram illustrating an example of an Internet of things (IoT) system, according to an embodiment of the present disclosure.
FIG. 2 is a flowchart illustrating a method by which a computing device controls a target device, according to an embodiment of the present disclosure.
FIG. 3 is a flowchart illustrating a method by which a computing device controls a target device, according to an embodiment of the present disclosure.
FIG. 4A is a flowchart illustrating a method of selecting an electronic device that satisfies a distance condition, according to an embodiment of the present disclosure. FIG. 4B is a diagram illustrating an example of selecting an electronic device that satisfies a distance condition, according to an embodiment of the present disclosure.
FIG. 5A is a flowchart illustrating a method of selecting an electronic device that satisfies an angle condition, according to an embodiment of the present disclosure. FIG. 5B is a diagram illustrating an example of selecting an electronic device that satisfies an angle condition, according to an embodiment of the present disclosure.
FIG. 6 is a flowchart illustrating a method by which a computing device determines a target device, according to an embodiment of the present disclosure.
FIG. 7 is a flowchart illustrating a method by which a computing device determines a target device, according to an embodiment of the present disclosure.
FIG. 8A is a flowchart illustrating a method of controlling a target device to output information associated with an electronic device, according to an embodiment of the present disclosure. FIG. 8B is a diagram illustrating a target device outputting information associated with an electronic device, according to an embodiment.
FIG. 9 is a flowchart illustrating a method of controlling guide information for a position of an electronic device to be output, according to an embodiment of the present disclosure.
FIG. 10A is a flowchart illustrating a method of controlling a target device by determining a position of the target device, according to an embodiment of the present disclosure. FIG. 10B is a diagram illustrating an example of controlling a target device by determining a position of the target device, according to an embodiment.
FIG. 11 is a flowchart illustrating a method of controlling an electronic device located in a gaze direction of the user as a virtual assistant system is activated, according to an embodiment of the present disclosure.
FIG. 12 is a flowchart illustrating a method of allowing access of a new user terminal to an IoT system, according to an embodiment of the present disclosure.
FIG. 13 is a flowchart illustrating a method of controlling a target device based on determining that a plurality of user input signals conflict with one another, according to an embodiment of the present disclosure.
FIG. 14 is a diagram illustrating an example of a configuration of an IoT system, according to an embodiment of the present disclosure.

### Mode for the Invention

Throughout the disclosure, the expression "at least one of a, b or c" indicates only a, only b, only c, both a and b, both a and c, both b and c, all of a, b, and c, or variations thereof.

Throughout the specification, the term "angle of arrival (AoA)" may refer to an angle between a reference direction and a direction of a progress vector in the wave. In an embodiment of the present disclosure, the reference direction may be a direction of a straight line between antennas included in a reference device. For example, the reference direction may be a direction of a straight line that connects two antennas included in the reference device in the X-Z plane. Additionally or alternatively, the reference direction may be a horizontal direction.

Throughout the specification, the expression "distance difference of an arbitrary electronic device" may refer to a difference between a distance to a first reference device and a distance to a second reference device from the arbitrary electronic device. The expression "AoA of an arbitrary electronic device" may refer to at least one of an AoA of the arbitrary electronic device to the first reference device or an AoA of the arbitrary electronic device to the second reference device. The expression "angle difference of an arbitrary electronic device" may refer to an angle difference between an AoA of the arbitrary electronic device and a reference AoA.

Throughout the specification, the expression "gaze direction of the user or user gaze direction" may refer to a user's facing direction, i.e., a direction in which the user gazes in a three dimensional (3D) space. In an embodiment of the present disclosure, the gaze direction of the user may not be limited to an actual eye direction of the user and may be a direction in which the user's face is directed. For example, an arbitrary object located in a straight direction from the user may be located in the gaze direction of the user even when the user does not actually gaze at the arbitrary object For example, the arbitrary object that is visually recognizable even without a need for the user to raise his/her head, twist his/her torso or move him/herself may be located in a direction that the user faces.

Throughout the specification, the X-Y plane may be a plane parallel to the surface of the Earth. For example, a direction on the X-Y plane may be a left-right direction with respect to a reference device (or the user). The X-Z plane and the Y-X plane may be perpendicular to the surface of the Earth. For example, a direction on the X-Y plane may be an up-down direction with respect to a reference device (or the user).

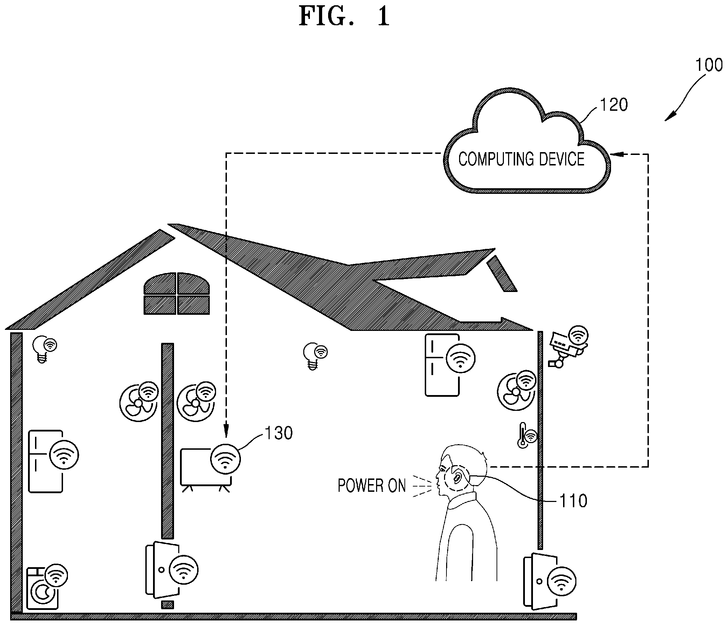

FIG. 1 is a diagram illustrating an example of an Internet of things (IoT) system according to an embodiment of the present disclosure.

An IoT system 100 may include a reference device 110 (e.g., a wireless earphone), a computing device 120 and one or more electronic devices 130 (e.g., a television (TV)), without being limited thereto. Although a home IoT system is shown in FIG. 1 as an example of the IoT system 100, the present disclosure is not limited thereto and IoT systems for various environments and purposes such as a factory IoT system, an autonomous driving IoT system, etc., may be used. The computing device 120 of the home IoT system is shown in FIG. 1 as being located in a different space from the reference device 110 and the one or more electronic devices 130, but the location of the computing device 120 is not limited thereto.

The one or more electronic devices 130 may include an electronic device that may be controlled by the computing device 120 in the IoT system 100. For example, in the home IoT system, the one or more electronic devices 130 may include home appliances such as a TV, a refrigerator, an air conditioner, etc., lights, a door lock device, etc. One or more electronic devices 130 may transmit or receive digital signals. In an embodiment of the disclosure, the one or more electronic devices 130 may transmit or receive ultra wide band (UWB) signals.

The reference device 110 may transmit or receive digital signals. In an embodiment of the present disclosure, the reference device 110 may transmit or receive UWB signals. For example, the reference device 110 may transmit or receive UWB signals to or from the one or more electronic devices 130. In an embodiment of the present disclosure, the reference device 110 may be able to communicate with or connected to a user terminal wiredly/wirelessly. For example, the reference device 110 may be a wireless earphone, and the user terminal associated with the reference device 110 may be a smart phone wirelessly connected to the wireless earphone. In an embodiment of the present disclosure, the reference device 110 may be a part of the user terminal and may be included in the user terminal. For example, the reference device 110 may be a UWB signal transmitting and receiving device embedded in the user terminal.

The computing device 120 may include one or more servers (e.g., an IoT server). In an embodiment of the present disclosure, the computing device 120 may provide signals to the one or more electronic devices 130 or receive signals from the one or more electronic devices 130. For this, the computing device 120 may be able to communicate with or wiredly or wirelessly connected to the one or more electronic devices 130. For example, a signal may include at least one of information, data, a request or an instruction for controlling the one or more electronic devices 130. Additionally or alternatively, the signal may include at least one of information, data, a request or an instruction used by the computing device 120 to perform an arbitrary operation.

In an embodiment of the present disclosure, the computing device 120 may receive the signal from the reference device 110 or provide the signal to the reference device 110. For example, the computing device 120 may be able to communicate directly with or wiredly or wirelessly connected to the reference device 110. For example, the reference device 110 may be embedded in the computing device 120. Additionally or alternatively, the computing device 120 may be able to communicate with or wiredly or wirelessly connected to a user terminal associated with the reference device 110. In this case, the computing device 120 may provide the signal to the reference deice 110 or receive the signal from the reference device 110 through the user terminal.

The computing device 120 may receive a user input signal to control at least one of the devices included in the IoT system 100. For example, the computing device 120 may receive the user input signal from a device that is able to communicate with or wiredly or wirelessly connected to the computing device 20. The user input signal may include at least one of data, information, an identifier, a request or an instruction corresponding to a user input.

The computing device 120 may obtain information about at least one of an electronic device or an operation to be controlled from the received user input signal. In an embodiment of the present disclosure, the computing device 120 may determine a target device from the one or more electronic devices 130. For example, the computing device 120 may determine the target device based on information about the electronic device to be controlled (e.g., a device identifier). Additionally or alternatively, based on the information about an operation obtained from the user input signal, the computing device 120 may select a device that is able to perform the operation as the target device. Additionally or alternatively, the computing device 120 may determine the target device based on information about a position of each of the one or more electronic devices 130. The position information of each of the one or more electronic devices 130 may be information identified based on a UWB signal transmitted or received between the reference device 110 and each electronic device.

The computing device 120 may control the target device. In an embodiment of the present disclosure, the computing device 120 may control the target device to perform an operation corresponding to the user input signal. For this, the computing device 120 may transmit a control signal to the target device.

Referring to FIG. 1, the computing device 120 may receive a signal corresponding to a user voice command "power on" (i.e., the user input signal). The user input signal may include only information about an operation to be controlled without an extra device identifier. The computing device 120 may identify electronic devices (e.g., a turned-off light, a washing machine, a fan, a TV**,** etc.) that may perform an operation (i.e., power on) corresponding to the received signal.

The computing device 120 may select the TV 130 as the target device that may perform the operation based on the position information of the identified electronic devices. For example, the computing device 120 may determine that the TV 130 is located in a gaze direction of the user based on the UWB signal transmitted and received between the wireless earphone 110 and the TV 130, and determine the TV 130 as the target device. The computing device 120 may control the TV 130 determined as the target device to be powered on. The TV 130 may be powered on only by the user's voice command "power on".

Although the computing device 120 is shown in FIG. 1 as receiving the user input signal from the reference device 110, it is not limited thereto. For example, the computing device 120 may receive the user input signal through a user terminal connected to the reference device 110. Additionally or alternatively, the computing device 120 may receive the user input signal through an input device included in the computing device 120.

Although the computing device 120 and the reference device 110 are shown in FIG. 1 as separate devices, it is not limited thereto. For example, the computing device 120 and the reference device 110 may be a same device. In this case, the reference device 110 may perform functions and operations of the computing device. For example, the reference device 110 and the computing device 120 may be sub-devices that make up one device.

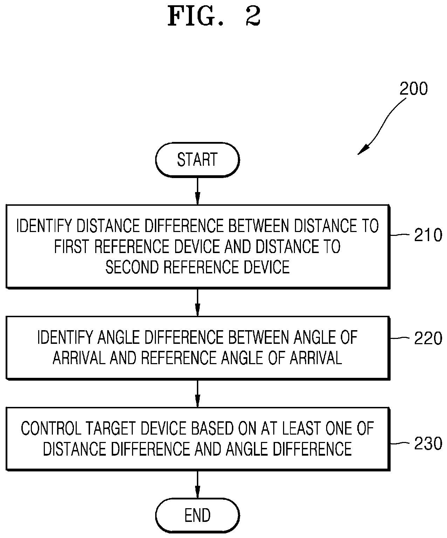

FIG. 2 is a flowchart illustrating a method by which a computing device controls a target device, according to an embodiment of the present disclosure.

Referring to FIG. 2, a method 200 by which a computing device (e.g., the computing device of FIG. 1) controls a target device may include operations 210 to 230. The method 200 of controlling the target device is not limited to what is shown in FIG. 2, and may further include an operation not shown in FIG. 2. For example, the computing device may first determine whether the reference device is activated (e.g., whether the reference device is mounted). The computing device may perform operations 210 to 230 based on determining that the reference device is activated.

In operation 210, the computing device may identify a distance difference between a distance to a first reference device and a distance to a second reference device from one or more electronic devices. In an embodiment of the present disclosure, the computing device may identify the distance difference by receiving information about a difference between the distance to the first reference device and the distance to the second reference device from an electronic device. In an embodiment of the present disclosure, the computing device may calculate the distance difference between the distance to the first reference device and the distance to the second reference device from an electronic device.

In operation 220, the computing device may identify an angle difference between an angle of arrival (AoA) of the one or more electronic devices to at least one of the first or second reference device (hereinafter, a reference device) and a reference AoA. In an embodiment of the disclosure, the computing device may identify the angle difference by receiving information about a difference between an AoA of an electronic device to the reference device and the reference AoA. In an embodiment of the disclosure, the computing device may calculate the angle difference between the AoA of an electronic device to the reference device and the reference AoA.

In operation 230, the computing device may control the target device based on at least one of the distance difference or the angle difference. In an embodiment of the present disclosure, the target device may be at least one of the one or more electronic devices. In an embodiment of the present disclosure, the target device may be the reference device. In an embodiment of the present disclosure, the target device may be a user terminal associated with the reference device. In an embodiment of the present disclosure, the target device may be a moving object including the reference device.

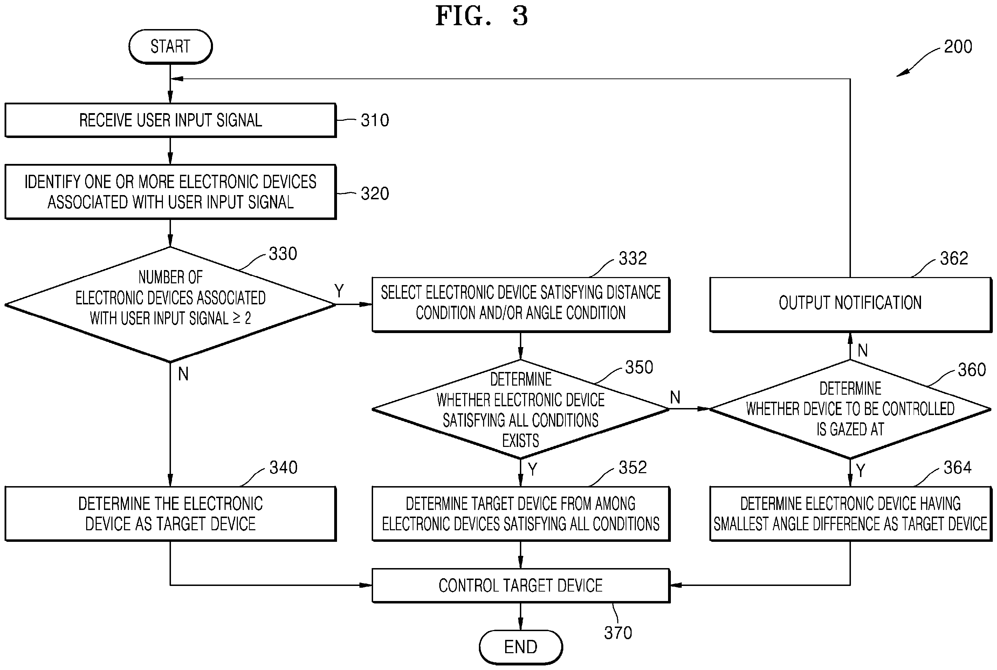

FIG. 3 is a flowchart illustrating a method by which a computing device controls a target device, according to an embodiment of the present disclosure.

Specifically, FIG. 3 may represent a method by which a computing device (e.g., the computing device of FIG. 1) determines a target device and controls the target device in an IoT system. In an embodiment of the present disclosure, the computing device may determine a device located in a particular area (e.g., in a gaze direction of the user who wears the reference device) with respect to the reference device as the target device from among electronic devices included in the IoT system. For example, the computing device may determine a device determined as being gazed upon by the user as the target device.

In operation 310, the computing device may receive a user input signal. In an embodiment of the present disclosure, the computing device may receive the user input signal from at least one (hereinafter, a user terminal) of a user terminal, the reference device, an electronic device or an input device that is able to communicate with or wiredly/wirelessly connected with the computing device. For example, the user input signal may be a digital signal converted from a voice command of the user.

In operation 320, the computing device may identify one or more electronic devices associated with the user input signal. In other words, the computing device may identify one or more electronic devices based on the received user input signal. In an embodiment of the present disclosure, the computing device may extract at least one of a device or an operation to be controlled from the user input signal by analyzing the user input signal.

In an embodiment of the present disclosure, the computing device may identify one or more electronic devices that are able to perform an operation according to the user input signal from among a plurality of electronic devices included in the IoT system. For example, in response to receiving a signal corresponding to a user command 'raise the temperature', the computing device may identify a refrigerator and an air conditioner that are able to perform a 'temperature-raising' operation. In an embodiment of the present disclosure, the computing device may identify one or more electronic devices by analyzing a device identifier included in the user input signal. For example, in response to receiving a signal corresponding to a user command 'turn off the light', the computing device may identify one or more lights included in the IoT system.

In operation 330, the computing device may determine whether there are two or more electronic devices associated with the user input signal. Based on determining that there are less than two electronic devices, i.e., one electronic device, associated with the user input signal, the computing device may determine the electronic device as the target device in operation 340. On the other hand, based on the number of electronic devices associated with the user input signal being two or more, i.e., plural, the computing device may select an electronic device that satisfies a distance condition and/or an angle condition from among the plurality of electronic devices, in operation 332.

In an embodiment of the disclosure, the distance condition of operation 332 may be a condition that requires a distance difference between a distance to the first reference device and a distance to the second reference device from an electronic device to be smaller than a first threshold. For example, the computing device may determine that an electronic device having a distance difference between the distance to the first reference device and the distance to the second reference device smaller than the first threshold satisfies the distance condition. In an embodiment of the present disclosure, the angle condition of operation 330 may be a condition that requires an angle difference between an AoA of an electronic device to at least one of the first reference device or the second reference device (hereinafter, the reference device) and the reference AoA to be smaller than a second threshold. For example, the computing device may determine that an electronic device having an angle difference between the AoA to the reference device and the reference AoA smaller than the second threshold satisfies the angle condition.

In operation 350, the computing device may determine whether there is an electronic device that satisfies both the distance condition and the angle condition among the plurality of electronic devices. For example, the computing device may determine whether there is an electronic device having a distance difference smaller than the first threshold and an angle difference smaller than the second threshold. Based on determining that there are electronic devices that satisfy both the conditions, the computing device may determine a target device from among the electronic devices that satisfy both the conditions, in operation 352.

On the other hand, based on determining that there is no electronic device that satisfies both the conditions, the computing device may determine whether the user is gazing at a device to be controlled, in operation 360. For this, in an embodiment of the present disclosure, the computing device may provide a request to check gazing to a user terminal. The computing device may receive a gazing check signal from the user terminal. The gazing check signal may include information indicating whether the user is gazing at a device to be controlled. The computing device may determine whether the user is gazing at the device to be controlled, based on the received check signal.

Based on determining that the user is not gazing at the device to be controlled, the computing device may control the user terminal to output a notification in operation 362. The notification output in operation 362 may include a notification indicating that there is no controllable electronic device within a gaze range of the user. Additionally or alternatively, in operation 362, the output notification may include a notification requesting to gaze at the controllable electronic device and utter a command again.

Based on determining that the user is gazing at the device to be controlled, in operation 364, the computing device may determine an electronic device having the smallest angle difference as the target device among the plurality of electronic devices. In an embodiment of the present disclosure, the computing device may determine an electronic device having the smallest angle difference as the target device among at least some of the electronic devices that satisfy the distance condition.

In operation 370, the computing device may control the target device determined in at least one of operations 340, 352 or 364. In an embodiment of the present disclosure, the computing device may control the target device to perform an operation corresponding to the user input signal. For this, the computing device may transmit a control signal to the target device.

Referring to FIG. 3, a method 300 of controlling a target device may include operations 310 to 370, but is not limited thereto and may omit some of the illustrated operations or further include another operation. For example, the method 300 may further include operations of checking whether the determined target device corresponds to a device to be controlled by the user. For example, the computing device may omit operations 360 and 362, and may perform operation 364 based on determining that there is no electronic device that satisfies both the conditions. Furthermore, at least some of the operations illustrated in FIG. 3 may be performed in different order.

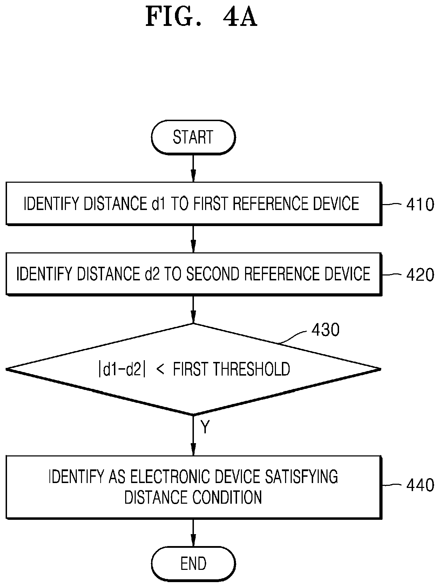

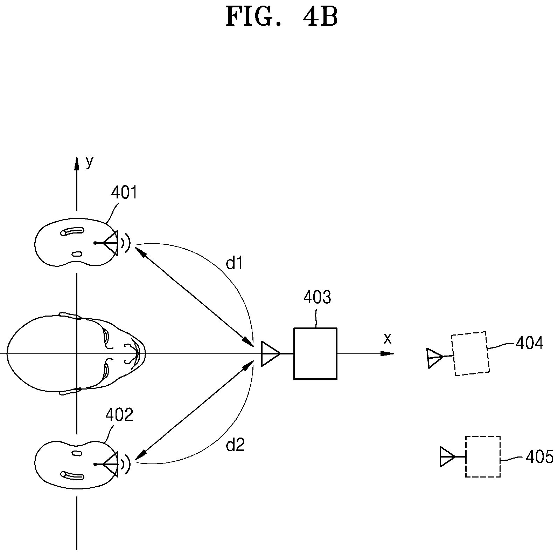

FIG. 4A is a flowchart illustrating a method of selecting an electronic device that satisfies a distance condition, according to an embodiment of the present disclosure. FIG. 4B is a diagram illustrating an example of selecting an electronic device that satisfies a distance condition, according to an embodiment of the present disclosure.

FIG. 4A may represent an example of a method of selecting an electronic device that satisfies the distance condition in operation 332 of FIG. 3. In an embodiment of the present disclosure, the computing device may identify an electronic device that satisfies the distance condition among a plurality of electronic devices based on a difference between the distance to the first reference device and the distance to the second reference device from each of the plurality of electronic devices.

In operation 410, the computing device may identify a distance d1 to the first reference device from an arbitrary electronic device. The distance d1 to the first reference device from the arbitrary electronic device may be calculated according to UWB signal transmission and reception information between the arbitrary electronic device and the first reference device. In an embodiment of the present disclosure, the computing device may receive information about the distance d1 from at least one of the arbitrary electronic device or the first reference device. In an embodiment of the present disclosure, the computing device may receive information for calculating the distance d1 (e.g., UWB signal transmission and reception information) from at least one of the arbitrary electronic device or the first reference device to calculate the distance d1. For example, the information for calculating the distance may include signal information transmitted and received between the arbitrary electronic device and the first reference device, transmission time, reception time, etc.

Likewise, in operation 420, the computing device may identify a distance d2 to the second reference device from an arbitrary electronic device. The distance identified in operations 410 and 420 may be one determined according to a UWB mechanism. Operations 410 and 420 are shown in sequence in FIG. 4A, but are not limited thereto. For example, the computing device may perform operations 410 and 420 in different order. Alternatively, the computing device may perform operations 410 and 420 at the same time.

In operation 430, the computing device may determine whether a distance difference between the distance d1 to the first reference device and the distance d2 to the second reference device is smaller than a first threshold. In other words, the computing device may compare the distance difference with the first threshold.

Based on determining that the distance difference is smaller than the first threshold, the computing device may identify the arbitrary electronic device as one that satisfies the distance condition in operation 440. The electronic device that satisfies the distance condition may be a device located in a gaze direction of the user on the X-Y plane.

The first threshold may be set in advance or in real time. For example, the first threshold may be a value set in advance in an initial setting stage. In an embodiment of the disclosure, the first threshold may be a value set based on a distance between the first reference device and the second reference device. For example, the first threshold may be set to a value that is smaller than the distance between the first reference device and the second reference device. In an embodiment of the disclosure, the first threshold may be different or the same for each electronic device. Additionally or alternatively, the first threshold may be different or the same for each user. Additionally or alternatively, the first threshold may be different or the same according to the location of the reference device. Additionally or alternatively, the first threshold may be a value set based on a distance between the reference device and each electronic device.

The computing device may select an electronic device that satisfies the distance condition by performing the aforementioned operations 410 to 440 for each of the plurality of electronic devices. Referring to FIG. 4B, the computing device may identify a distance to a left earphone 401 from each electronic device 403, 404 or 405. Likewise, the computing device may identify a distance to a right earphone 402 from each electronic device 403, 404 or 405.

For example, based on determining that a difference between the distance d1 to the left earphone 401 and the distance d2 to the right earphone 402 is smaller than the first threshold, the computing device may identify that the electronic device 403 satisfies the distance condition. Likewise, based on determining that a difference between the distance d1 to the left earphone 401 and the distance d2 to the right earphone 402 from the electronic device 404 is smaller than the first threshold, the computing device may identify that the electronic device 404 satisfies the distance condition. On the other hand, based on determining that a difference between the distance d1 to the left earphone 401 and the distance d2 to the right earphone 402 from the electronic device 405 is equal to or larger than the first threshold, the computing device may identify that the electronic device 405 does not satisfy the distance condition. Hence, the computing device may select the electronic devices 403 and 404 from among the plurality of electronic devices 403, 404 and 405 as ones that satisfy the distance condition.

In an embodiment of the present disclosure, the computing device may simultaneously or sequentially perform operations 410 to 440 shown in FIG. 4A for each of the plurality of electronic devices. For example, referring to FIG. 4B, the computing device may perform operations 410 to 440 for the electronic device 404 while performing operations 410 to 440 for the electronic device 403. Alternatively, the computing device may perform operations 410 to 440 for the electronic device 403, and then perform operations 410 to 440 for the electronic device 404.

In an embodiment of the present disclosure, the first reference device and the second reference device may correspond to separate devices that exist in a pair. For example, as shown in FIG. 4B, the first reference device and the second reference device may be a pair of earphones, which are the left earphone 401 and the right earphone 402, respectively. In an embodiment of the present disclosure, the first reference device and the second reference device may be wiredly/wirelessly connected to a same user terminal. In an embodiment of the disclosure, the first reference device and the second reference device may be symmetrically located from each other. For example, the first electronic device and the second electronic device may have bilateral symmetry based on the user.

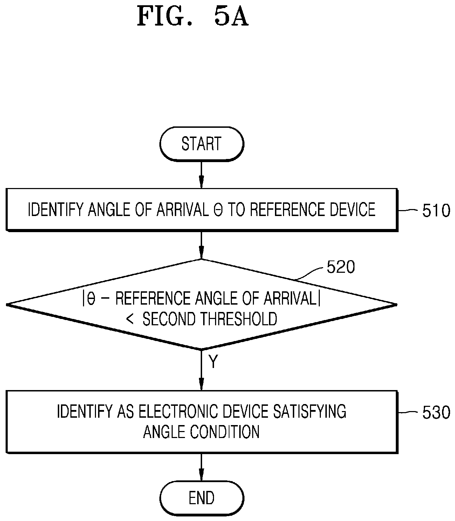

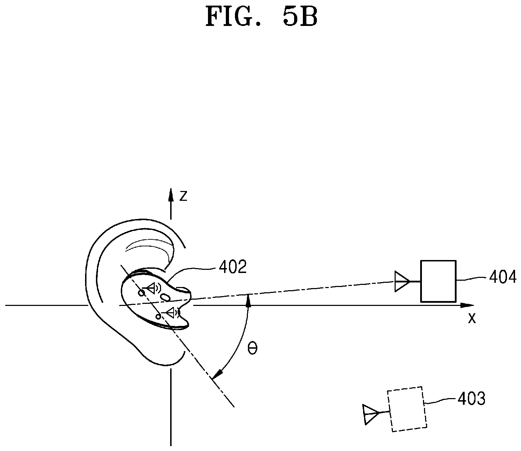

FIG. 5A is a flowchart illustrating a method of selecting an electronic device that satisfies an angle condition, according to an embodiment of the present disclosure. FIG. 5B is a diagram illustrating an example of selecting an electronic device that satisfies an angle condition, according to an embodiment of the present disclosure.

FIG. 5A may represent an example of a method of selecting an electronic device that satisfies the angle condition in operation 332 of FIG. 3. In an embodiment of the present disclosure, the computing device may identify an electronic device that satisfies the angle condition among the plurality of electronic devices based on an angle difference between an AoA of each of the plurality of electronic devices to at least one of the first reference device or the second reference device (hereinafter, the reference device) and a reference AoA (Standard-AoA).

Additionally or alternatively, the computing device may identify an electronic device that satisfies the angle condition among at least one electronic device based on an angle difference between an AoA of at least one electronic device that satisfies the distance condition to the reference device and the reference AoA. In other words, the computing device may only determine whether an electronic device that satisfies the distance condition satisfies the angle condition but may not determine whether an electronic device that does not satisfy the distance condition among the plurality electronic devices satisfies the angle condition.

In operation 510, the computing device may identify an AoA Θ of an arbitrary electronic device to the reference device. The AoA Θ of the arbitrary electronic device to the reference device may be calculated according to UWB signal transmission and reception information between the arbitrary electronic device and the reference device. In an embodiment of the present disclosure, the computing device may receive information about the AoA Θ from at least one of the arbitrary electronic device or the reference device. In an embodiment of the present disclosure, the computing device may receive information (e.g., UWB signal transmission and reception information) for calculating the AoA Θ from at least one of the arbitrary electronic device or the reference device to calculate the AoA Θ. For example, the information for calculating the AoA Θ may include signal information transmitted and received between the arbitrary electronic device and the reference device, transmission time, reception time, etc.

In operation 520, the computing device may determine whether the angle difference between the AoA Θ to the reference device and the reference AoA is smaller than a second threshold. In other words, the computing device may compare the angle difference with the second threshold.

Based on determining that the angle difference is smaller than the second threshold, the computing device may identify the arbitrary electronic device as one that satisfies the angle condition in operation 530. The electronic device that satisfies the angle condition may be a device located in a gaze direction of the user on the X-Z (or Y-Z) plane.

The reference AoA may be set in advance or in real time. In an embodiment of the disclosure, the reference AoA may be a value set in advance in an initial setting stage. For example, the reference AoA may be a value set based on an AoA to the identified reference device in the initial setting stage. In an embodiment of the disclosure, the reference AoA may be different or the same for each electronic device. Additionally or alternatively, the reference AoA may be different or the same for each user. Additionally or alternatively, the reference AoA may be different or the same for each reference device. Additionally or alternatively, the reference AoA may be different or the same according to the position of the reference device. Additionally or alternatively, the reference AoA may be a value set based on a distance between the reference device and each electronic device.

The second threshold may be set in advance or in real time. In an embodiment of the present disclosure, the second threshold may be a value set in advance in the initial setting stage. In an embodiment of the disclosure, the second threshold may be different or the same for each electronic device. Additionally or alternatively, the second threshold may be different or the same for each user. Additionally or alternatively, the second threshold may be different or the same for each reference device. Additionally or alternatively, the second threshold may be different or the same according to the position of the reference device. Additionally or alternatively, the second threshold may be a value set based on a distance between the reference device and each electronic device.

The computing device may select an electronic device that satisfies the angle condition by performing the aforementioned operations 510 to 530 for each of the plurality of electronic devices. In an embodiment of the present disclosure, the computing device may select an electronic device that satisfies the angle condition by performing the operations 510 to 530 for only the at least one electronic device that satisfies the distance condition among the plurality of electronic devices.

Referring to FIG. 5B, the computing device may determine an AoA of each electronic device 403 or 404 to the right earphone 402. For example, based on determining that the angle difference between the AoA of the electronic device 404 to the right earphone 402 and the reference AoA is smaller than the second threshold, the computing device may identify that the electronic device 404 satisfies the angle condition. On the other hand, based on determining that a difference between the AoA of the electronic device 403 to the right earphone 402 and the reference AoA is equal to or larger than the second threshold, the computing device may identify that the electronic device 403 does not satisfy the angle condition. Hence, the computing device may select the electronic device 404 from among the electronic devices 403 and 404 as one that satisfies the angle condition.

Additionally or alternatively, the computing device may also determine whether the electronic device 405 that does not satisfy the distance condition satisfies the angle condition In this case, based on determining that the angle difference between the AoA of the electronic device 405 to the right earphone 402 and the reference AoA is smaller than the second threshold, the computing device may identify that the electronic device 405 satisfies the angle condition.

In an embodiment of the present disclosure, the computing device may simultaneously or sequentially perform operations 510 to 530 for each of the plurality of electronic devices. Referring to FIG. 5B, the computing device may also perform operations 510 to 530 for the electronic device 404 while performing operations 510 to 530 for the electronic device 403. Alternatively, the computing device may perform operations 510 to 530 for the electronic device 403, and then perform operations 510 to 530 for the electronic device 404.

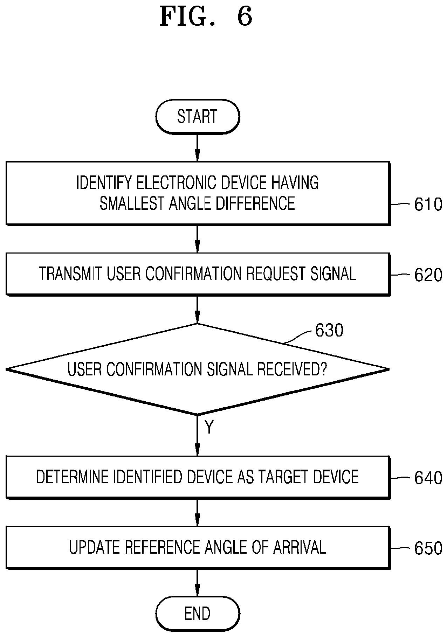

FIG. 6 is a flowchart illustrating a method by which a computing device determines a target device, according to an embodiment of the present disclosure.

FIG. 6 may represent an example of a method by which the computing device determines an electronic device having the smallest angle difference as the target device in operation 364 of FIG. 3. Referring to FIG. 3, based on determining that there is no electronic device that satisfies both the distance condition and the angle condition, the computing device may determine that an electronic device having the smallest angle difference between the AoA to the reference device and the reference AoA as the target device in operation 364.

In an embodiment of the present disclosure, based on determining that all electronic devices associated with a user input signal have the distance difference equal to or larger than the first threshold or the angle difference equal to or larger than the second threshold, the computing device may determine one of the electronic devices associated with the user input signal which has the smallest angle difference as the target device. In an embodiment of the present disclosure, based on determining that all at least one electronic device that satisfies the distance condition have an angle difference equal to or larger than the second threshold, the computing device may determine one of the at least one electronic device which has the smallest angle difference as the target device.

In operation 610, the computing device may identify an electronic device having the smallest angle difference between the AoA to the reference device and the reference AoA. In an embodiment of the present disclosure, the computing device may identify an electronic device having the smallest angle difference among the plurality of electronic devices associated with the user input terminal as the target device. In an embodiment of the present disclosure, the computing device may identify an electronic device having the smallest angle difference among the at least one device that satisfies the distance condition.

The computing device may request the user to confirm whether the identified electronic device corresponds to a device to be controlled by the user. For example, in operation 620, the computing device may transmit a user confirmation request signal to e.g., a user terminal (e.g., at least one of a user terminal, a reference device or an output device that is able to communicate with or wiredly/wirelessly connected to the computing device). For example, the computing device may control the user terminal to output a notification that requests user confirmation by transmitting the user confirmation request signal.

In operation 630, the computing device may receive a user confirmation signal. In an embodiment of the present disclosure, the computing device may receive, from the user terminal (e.g., at least one of a user terminal, a reference device or an input device that is able to communicate with or wiredly/wirelessly connected to the computing device), the user input signal indicating that the identified electronic device is the device to be controlled. For example, the user input signal received in operation 630 may be a user response signal to the user confirmation request signal transmitted in operation 620.

In response to receiving the user confirmation signal, the computing device may determine that the identified electronic device is the target device in operation 640. In addition, in operation 650, the computing device may update the reference AoA based on the AoA of the target device to the reference device (i.e., the AoA of the electronic device determined as the target device to the reference device). As the user confirmation procedure of operations 620 and 630 is performed, the device to be controlled by the user may be identified more accurately.

On the other hand, the computing device may receive a signal indicating that the identified electronic device is not the electronic device to be controlled by the user as a response to the user confirmation request of operation 620. In this case, the computing device may control the user terminal to output a notification requesting to gaze the electronic device to be controlled.

Although the method of determining the target device as shown in FIG. 6 includes operations 610 to 650, it is not limited thereto and may omit some of the operations or further include another operation. For example, the computing device may determine the identified electronic device as the target device without extra user confirmation, i.e., without operations 620 and 630. For example, the computing device may receive a reference AoA update request (e.g., an automatic correction request) from the user terminal, and based on this, perform operation 650.

In an embodiment of the present disclosure, the computing device may control the user terminal to output a notification indicating that a state of the reference device (e.g., a state of wearing the reference device) is different from a state in initial settings. Additionally or alternatively, the computing device may control the user terminal to output a notification requesting to adjust the state of the reference device to be equal to the state in the initial settings. Additionally or alternatively, with the adjustment of the state of the reference device, the computing device may determine whether the adjusted state of the reference device is equal to the state in the initial settings. For this, the computing device may determine whether a distance between the adjusted reference device and the target device and an AoA of the target device to the adjusted reference device satisfy conditions set in the initial settings (e.g., first threshold, reference AoA, second threshold, etc.). Based on determining that the state of the reference device is equal to the state in the initial settings, the computing device may control the user terminal to output a notification indicating that the state of the reference device has been adjusted to be equal to the state in the initial settings.

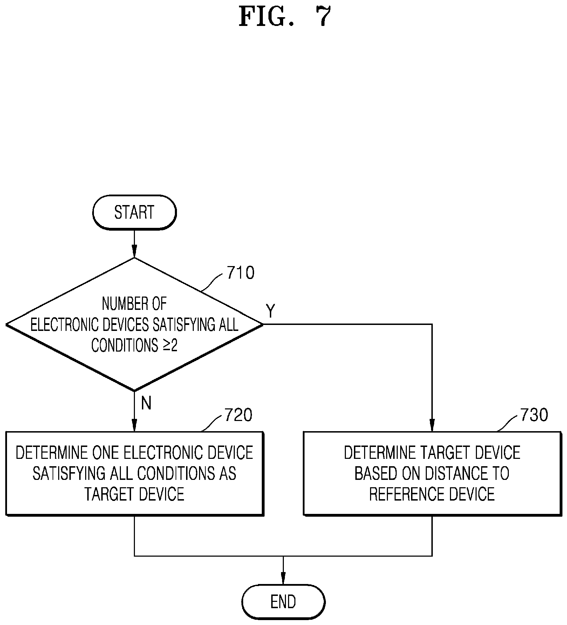

FIG. 7 is a flowchart illustrating a method by which a computing device determines a target device, according to an embodiment of the present disclosure.

FIG. 7 may represent an example of a method by which the computing device determines a target device from among electronic devices that satisfy all the conditions in operation 352 of FIG. 3. Referring to FIG. 3, based on determining that there are electronic devices that satisfy all the conditions, the computing device may determine a target device from among the electronic devices that satisfy all the conditions in operation 352. In an embodiment of the present disclosure, the electronic device that satisfies all the conditions may be an electronic device that satisfies the distance condition and the angle condition. For example, the electronic device that satisfies all the conditions may be an electronic device having a distance difference smaller than the first threshold and an angle difference smaller than the second threshold.

The computing device may identify the number of electronic devices that satisfy all the conditions. In an embodiment of the present disclosure, in operation 710, the computing device may determine whether there are two or more electronic devices that satisfy all the conditions.

Based on determining that there are less than two electronic devices, i.e., one electronic device, that satisfies both the distance condition and the angle condition, the computing device may determine the one electronic device as the target device in operation 720. Accordingly, the computing device may determine one electronic device at which the user is gazing (i.e., one electronic device that exists in the gaze direction of the user) as the target device.

Based on determining that there are two or more electronic devices, i.e., a plurality of electronic devices, that satisfy both the distance condition and the angle condition, the computing device may determine one of the electronic devices that satisfy both the distance condition and the angle condition as the target device. In an embodiment of the present disclosure, in operation 730, the computing device may determine the target device based on the distance to the reference device. For example, the computing device may determine one of the electronic devices that satisfy both the distance condition and the angle condition, which is nearest to the reference device, as the target device.

In an embodiment of the disclosure, the computing device may determine the target device from among the electronic devices that satisfy both the distance condition and the angle condition, based on a value of the user input signal (the user input signal received in 310 of FIG. 3). For example, the computing device may determine an electronic device at a longer distance from the reference device as the target device the higher the volume level of a user voice command, and an electronic device at a shorter distance from the reference device as the target device the lower the volume level of the user voice command.

Although the method of determining the target device as shown in FIG. 7 includes operations 710 to 730, it is not limited thereto and may omit some of the operations or further include another operation.

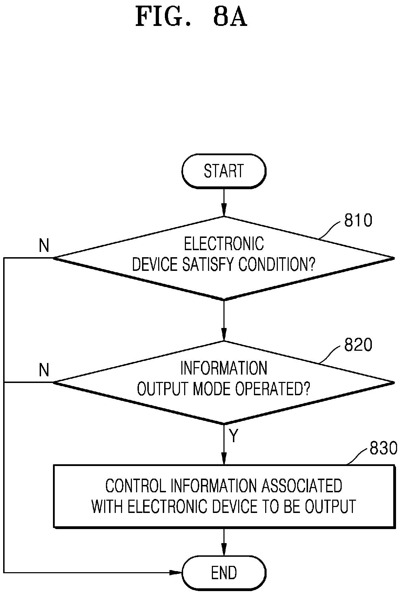

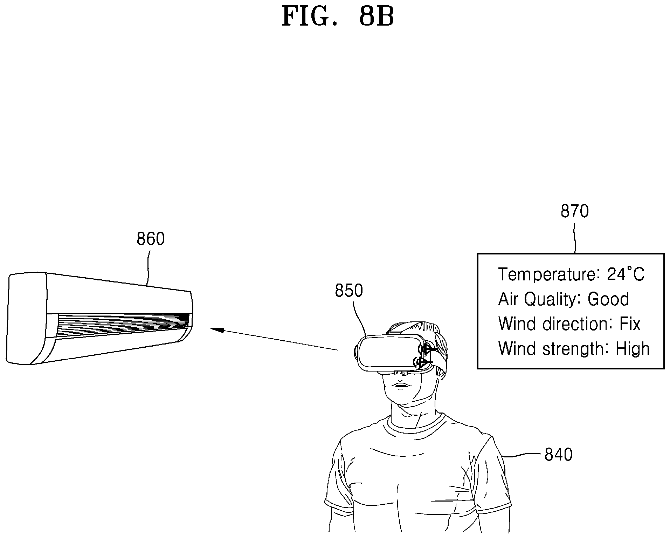

FIG. 8A is a flowchart illustrating a method of controlling a target device to output information associated with an electronic device, according to an embodiment of the present disclosure. FIG. 8B is a diagram illustrating a target device outputting information associated with an electronic device, according to an embodiment of the present disclosure.

FIG. 8A may illustrate a method of controlling the target device in operation 230 of FIG. 2. In an embodiment of the present disclosure, the target device may be a user terminal. For example, the target device may be a wearable device, a virtual reality (VR) device, an augmented reality (AR) device, etc. In an embodiment of the present disclosure, the first reference device and the second reference device may be included in the target device. For example, the first reference device and the second reference device may be parts of the target device to perform an arbitrary function (e.g., UWB signal transmission and reception).

In operation 810, the computing device may determine whether an arbitrary electronic device satisfies a condition. In an embodiment of the present disclosure, the computing device may determine whether an arbitrary electronic device satisfies the distance condition. For example, the computing device may compare the distance difference of the arbitrary electronic device with the first threshold to determine whether the distance condition is satisfied. The computing device may determine that an electronic device having a distance difference smaller than the first threshold satisfies the distance condition.

In an embodiment of the present disclosure, the computing device may determine whether the arbitrary electronic device satisfies the angle condition. For example, the computing device may compare the angle difference of the arbitrary electronic device with the second threshold to determine whether the angle condition is satisfied. The computing device may determine that an electronic device having an angle difference smaller than the second threshold satisfies the angle condition.

Based on determining that the arbitrary electronic device satisfies both the distance condition and the angle condition, the computing device may determine whether information output mode of the target device is activated, in operation 820. In an embodiment of the present disclosure, the computing device may determine whether the information output mode is activated by identifying a current mode of the target device. For example, the information output mode may be a setting mode in which the target device outputs information associated with the arbitrary electronic device.

In operation 830, the computing device may control the target device to output information associated with the arbitrary electronic device. In an embodiment of the present disclosure, the computing device may control the target device to output information about an electronic device that satisfies both the distance condition and the angle condition. For this, the computing device may transmit the associated information to the target device. Additionally or alternatively, the computing device may control the arbitrary electronic device to transmit the associated information to the target device. In an embodiment of the disclosure, the target device may be a device equal to the computing device for performing the method of FIG. 8A. In this case, the target device may perform functions and operations of the computing device. For example, in operation 830, the computing device may output information relating to the arbitrary electronic device as the target device. In an embodiment of the present disclosure, the reference device, the target device and the computing device may be sub-devices that constitute one device. For example, the reference device as a UWB signal transmission and reception device, the target device as a display device (i.e., a display), and the computing device as a processing device (e.g., a processor) may be included in one device (e.g., a VR device).

Referring to FIG. 8B, when the user 840 wears a VR device 850 and gazes at an air conditioner 860, the air conditioner 860 may satisfy both the distance condition and the angle condition. In an embodiment of the present disclosure, the air conditioner 860 may have a distance difference between the distance to the first reference device and the distance to the second reference device smaller than the first threshold and an angle difference between the AoA to the reference device and the reference AoA smaller than the second threshold. The computing device may control information 870 associated with the air conditioner 860, e.g., current temperature, air quality, wind direction, wind strength, etc., to be visually output through the VR device 850.

In FIG. 8B, the first reference device and the second reference device may be included in the VR device 850 as partial components. For example, the first reference device and the second device may be UWB signal transmission and reception devices (e.g., sensors, modules, antennas, etc.) symmetrically built into the VR device 850. For example, the first reference device and the second reference device may be located on the left and right sides to form bilateral symmetry based on the center of the VR device 850.

Although the method of controlling the target device to output information associated with an electronic device as shown in FIG. 8A includes operations 810 to 830, it is not limited thereto and may omit some of the operations or further include another operation. For example, the computing device may control the target device to output information associated with the electronic device without the operation of determining the mode of the target device, i.e., without the operation 820. In an embodiment of the disclosure, the computing device may transmit the information associated with the electronic device to the target device regardless of the mode of the target device. In this case, the target device may or may not output the received information associated with the electronic device depending on the current mode.

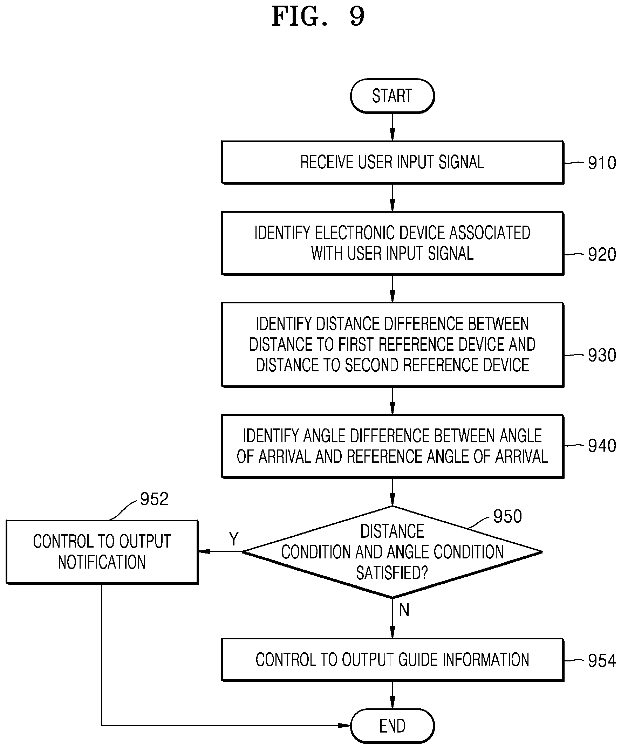

FIG. 9 is a flowchart illustrating a method of controlling guide information for a position of an electronic device to be output, according to an embodiment of the present disclosure.

In operation 910, the computing device may receive a user input signal. In an embodiment of the present disclosure, the user input signal may include a signal requesting position information of an arbitrary electronic device. For example, the user input signal may be a signal corresponding to a user input to request the position information of the arbitrary electronic device. The user input signal may include information about an electronic device to be looked for by the user.

In operation 920, the computing device may identify an electronic device associated with the received user input signal. In other words, the computing device may identify the electronic device to be looked for by the user based on the received user input signal. For example, the computing device may extract a device identifier from the user input signal.

In operation 930, the computing device may identify a distance difference between the distance to the first reference device and the distance to the second reference device from the identified electronic device. In operation 930 of FIG. 9, the embodiments of FIGS. 4A and 4B may be applied. In operation 940, the computing device may identify an angle difference between the AoA of the identified electronic device to the reference device and the reference AoA. In operation 940 of FIG. 9, the embodiments of FIGS. 5A and 5B may be applied.

In operation 950, the computing device may determine whether the identified electronic device satisfies the distance condition and the angle condition. Based on determining that the identified electronic device satisfies the distance condition and the angle condition, the computing device may control the target device to output a notification, in operation 952. In an embodiment of the present disclosure, based on determining that the distance difference of the identified electronic device is smaller than the first threshold and the angle difference is smaller than the second threshold, the computing device may control e.g., a user terminal, to output a notification. For example, the notification may be one that indicates that the electronic device to be looked for by the user is located in a direction of the user's face (i.e., a user gaze direction).

Based on determining that the identified electronic device does not satisfy at least one of the distance condition or the angle condition, the computing device may control the target device to output guide information, in operation 954. In an embodiment of the present disclosure, based on determining that the distance difference of the identified electronic device is equal to or larger than the first threshold or the angle difference is equal to or larger than the second threshold, the computing device may control e.g., the user terminal, to output the guide information regarding the position of the identified electronic device.

The guide information may include movement information for the identified electronic device to satisfy at least one of the distance condition or the angle condition. In an embodiment of the present disclosure, the guide information may include first movement information for reducing the distance difference between the distance to the first reference device and the distance to the second reference device from the identified electronic device. The first movement information may include a user gaze moving direction (e.g., left, right, etc.), a gaze moving degree, etc., for the identified electronic device to satisfy the distance condition. For example, the first movement information may include information indicating a movement to the left as far as 40 degrees.

In an embodiment of the present disclosure, the guide information may include second movement information for reducing the angle difference between the AoA of the identified electronic device to the reference device and the reference AoA. The second movement information may include a user gaze moving direction (e.g., up, down, etc.), a gaze moving degree, etc., for the identified electronic device to satisfy the angle condition. For example, the second movement information may include information indicating a downward movement as far as 25 degrees.

Referring to FIG. 9, the method by which the computing device (e.g., the computing device of FIG. 1) outputs the guide information regarding the position of the electronic device includes operations 910 to 954, but is not limited thereto, and may further include another operation or may omit some operations. For example, when no UWB signal is received by the reference device from the identified electronic device in operation 910, the computing device may control e.g., the user terminal, to output a notification indicating that the identified electronic device does not exist in the IoT space.

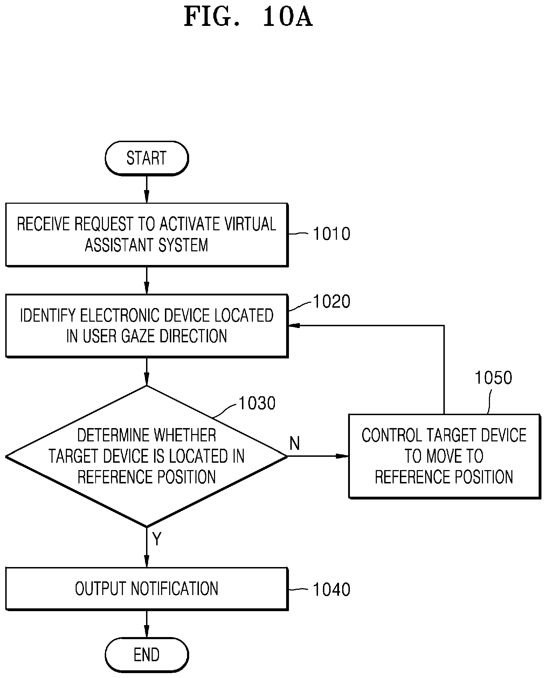

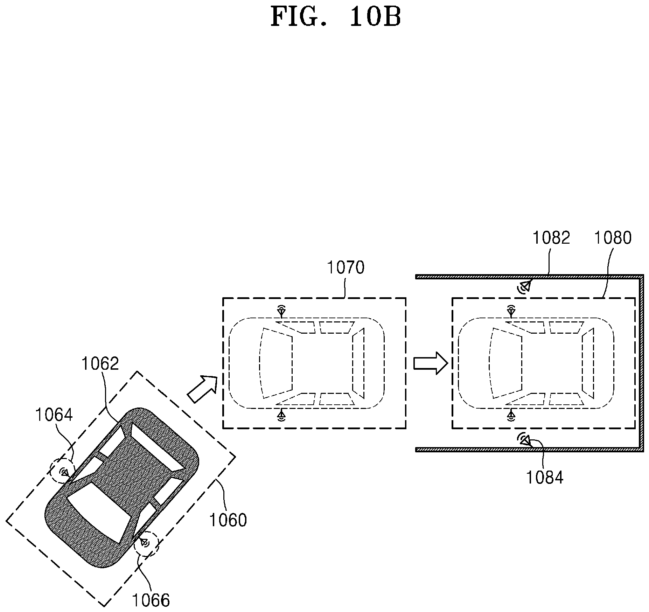

FIG. 10A is a flowchart illustrating a method of controlling a target device by determining a position of the target device, according to an embodiment of the present disclosure. FIG. 10B is a diagram illustrating an example of controlling a target device by determining a position of the target device, according to an embodiment of the present disclosure.

Referring to FIG. 10A, the method by which the computing device (e.g., the computing device of FIG. 1) determines the position of the target device to control the target device includes operations 1010 to 1050, but is not limited thereto, and may further include another operation or may omit some operations.

In operation 1010, the computing device may receive a user input signal regarding the target device. In an embodiment of the present disclosure, the computing device may receive a user input signal requesting the target device to move into an aimed position. For example, the target device may be a moving object. For this, the computing device is able to communicate with or wiredly/wirelessly connected to the moving object, or included in the moving object.

In operation 1020, the computing device may identify distance differences and angle differences of one or more electronic devices to the reference device. For example, the reference device may be included in the moving object. In an embodiment of the present disclosure, the one or more electronic devices may be associated with the aimed position of the moving object. For example, when the aimed position is a parking section, the one or more electronic devices may be located in the parking section.

In operation 1030, the computing device may determine whether the target device is located in a reference position (e.g., a ready position) based on the identified distance difference and angle difference. In an embodiment of the present disclosure, the computing device may determine whether the moving object is located in the reference position depending on whether the distance condition and angle condition of the one or more electronic devices to the reference device included in the moving object are satisfied. The first threshold, the reference AoA and the second threshold used to determine whether the moving object is located in the reference position may be values set in the initial setting stage. For example, the first threshold may be set based on the distance difference of the one or more electronic devices when the moving object is located in the reference position. For example, the reference AoA may be set based on the AoA of the one or more electronic devices to the moving object when the moving object is located in the reference position.

Based on determining that the target device is located in the reference position, the computing device may control the target device to output a notification, in operation 1040. In an embodiment of the present disclosure, the computing device may output a notification through a user terminal (e.g., at least one of the moving object, the reference device, the user terminal or an output device). For example, the output notification may include a notification indicating that the moving object is located in the reference position. For example, the output notification may include a notification indicating completion of preparation for movement to the aimed position. For example, the output notification may include movement guide information for movement to the aimed position.

Based on determining that the target device is located in the reference position, the computing device may control the target device to move to the reference position, in operation 1050. In an embodiment of the present disclosure, based on determining that the moving object is located in a position other than the reference position, the computing device may control the moving object to perform an operation of moving to the reference position to be performed. For example, the computing device may transmit a control signal for the moving object to perform an operation of moving to the reference position without extra user intervention. For this, the computing device may provide movement guide information for the moving object to move to the reference position.

Referring to FIG. 10B, the moving object 1062 may include a first reference device 1064 and a second reference device 1066, which are capable of transmitting and receiving UWB signals. The first reference device 1064 and the second reference device 1064 may be located to form bilateral symmetry based on the center of the moving object 1062. One or more electronic devices may be UWB signal transmitting and receiving devices located in a parking section. For example, a pair of UWB signal transmitting and receiving devices 1082 and 1084 may be located o form symmetry in the parking section.

In FIG. 10B, the computing device may determine that a current location 1060 of the moving object 1062 does not correspond to a reference position 1070 based on distance differences and angle differences of the UWB signal transmitting and receiving devices 1082 and 1084 to the first reference device 1064 and the second reference device 1066. Based on this, the computing device may output a notification through e.g., a user terminal, which indicates that the moving object 1062 is not located in the reference position 1070. For example, the output notification may include guide information for moving to the reference position 1070.

In an embodiment of the disclosure, when the moving object 1062 is located in the reference position 1070, the computing device may control the moving device 1062 to move to the aimed position 1080. For example, the computing device may transmit a control signal for the moving object 1062 to perform an operation of moving to the aimed position 1080 without extra user intervention. Additionally or alternatively, the computing device may transmit movement guide information for the moving object 1062 to perform an operation of moving to the aimed position 1080.

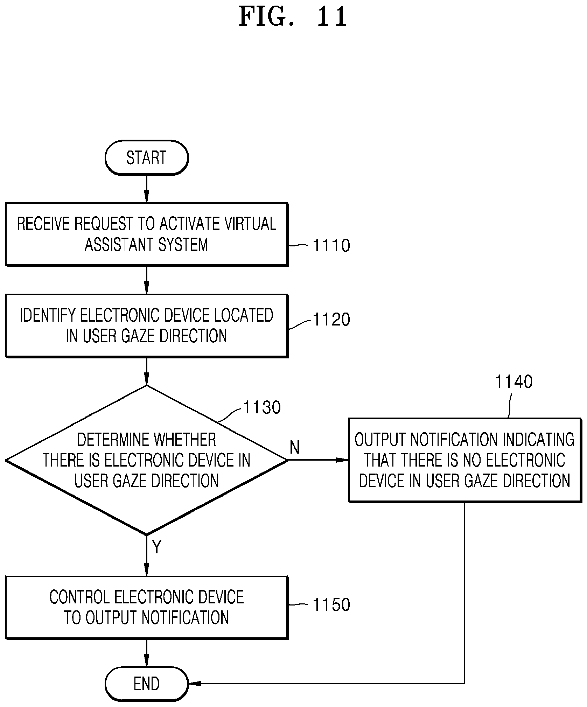

FIG. 11 is a flowchart illustrating a method of controlling an electronic device located in a gaze direction of the user as a virtual assistant system is activated, according to an embodiment of the present disclosure.

An IoT system may include a virtual assistant system. In operation 1110, the computing device (e.g., the computing device of FIG. 1) may receive a request to activate the virtual assistant system. For example, the request to activate the virtual assistant system may correspond to instruction utterance of the user to wake up the virtual assistant system. For example, the computing device may receive a user input signal indicating a request to activate the virtual assistant system from at least one of the electronic devices connected to the virtual assistant system.

In operation 1120, the computing device may identify an electronic device located in the user gaze direction. In an embodiment of the present disclosure, the computing device may identify an electronic device that satisfies the distance condition and the angle condition for the reference device among the one or more electronic devices associated with the virtual assistant system. Based on the result of the identifying, the computing device may determine whether there is an electronic device in the user gaze direction in operation 1130.

Based on determining that there is no electronic device in the user gaze direction, the computing device may control to output a notification indicating that there is no electronic device in the user gaze direction, in operation 1140. In an embodiment of the present disclosure, the computing device may control e.g., a user terminal, to output the notification indicating that there is no electronic device (e.g., an electronic device to perform an operation) associated with the virtual assistant system in the user gaze direction.

Based on determining that there is an electronic device in the user gaze direction, the computing device may control the electronic device located in the user gaze direction to output a notification, in operation 1150. For example, the computing device may control the electronic device identified as being located in the user gaze direction to output a visual notification (e.g., light flicker), an auditory notification (e.g., notification sound), etc. This may enable the user to recognize an electronic device located in the user gaze direction. In other words, the user may recognize an electronic device to perform a user command in the virtual assistant system.

As shown in FIG. 11, the method of controlling an electronic device located in the user gaze direction may include operations 1110 to 1150, but is not limited thereto and may omit some of the illustrated operations or further include another operation.

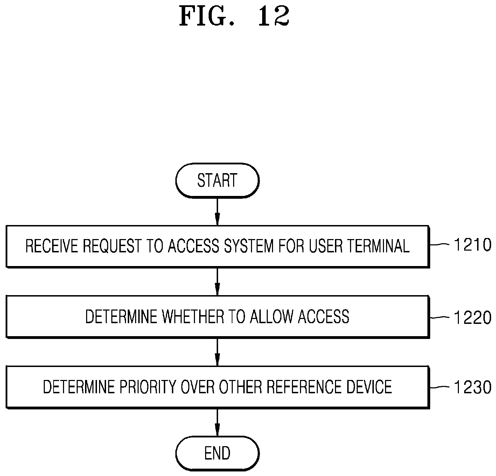

FIG. 12 is a flowchart illustrating a method of allowing access of a new user terminal to an IoT system, according to an embodiment of the present disclosure.

To control electronic devices in the IoT system, there may be two or more user terminals connected to the IoT system. Furthermore, a computing device in the IoT system may receive a user input signal to control the electronic devices from each user terminal. Each user input signal may be input by a different user.

In operation 1210, the computing device may receive a request to access the IoT system for the user terminal. In an embodiment of the present disclosure, the computing device may receive the system access request from a user terminal associated with the first reference device and the second reference device. For example, based on installation or activation of a reference device, a user terminal associated with the reference device may transmit a system access request to the computing device. For example, in response to receiving a user input indicating the system access request, the user terminal may transmit the system access request to the computing device. The user terminal associated with the reference device may refer to a user terminal that is able to communicate with or wiredly/wirelessly connected to the reference device or a user terminal that includes the reference device.

In operation 1220, the computing device may determine whether to allow the access of the user terminal based on the received access request. In an embodiment of the present disclosure, the computing device may determine whether to allow the access of the user terminal by determining whether the user terminal that requests the access satisfies an arbitrary condition. For example, the computing device may allow the user terminal to access the IoT system based on the determining that the user terminal satisfies the arbitrary condition.

In an embodiment of the present disclosure, the computing device may transmit, to a main user terminal in the IoT system, a signal that confirms whether access of the user terminal that requests access is allowed, and in return, receive a response signal. The computing device may determine whether to allow the access of the user terminal based on the received response signal. The main user terminal may be a user terminal having the highest priority among the one or more user terminals connected to the IoT system.

When the access to the IoT system is allowed, the device allowed for the access may be able to control one or more electronic devices in the IoT system. In an embodiment of the present disclosure, the computing device may receive a user input signal from the user terminal allowed for the access, and control the one or more electronic devices in the IoT system based on the received user input signal.

In operation 1230, the computing device may determine priority of the user terminal allowed for the access over the other user terminals. The other user terminals may be user terminals that have already been connected to the IoT system. The other user terminals may also be associated with one or more reference devices, and the reference device associated with the other user terminals may be different from the reference device associated with the user terminal allowed for the access.

The priority may include information about according to which signal the computing device controls the target device when the user input signal received through the user terminal allowed for the access conflicts with the user input signal received through the other user terminal. Alternatively, the priority may include a rank (i.e., processing order) of which signal is to be processed first among a plurality of user input signals input at the same time.

As shown in FIG. 12, the method of allowing access of a new user terminal may include operations 1210 to 1230, but is not limited thereto and may omit some of the illustrated operations or further include another operation. In an embodiment of the present disclosure, the computing device may perform initial settings for the new user terminal based on allowing of the access of the new user terminal. For example, the computing device may set the first threshold, the second threshold and the reference AoA to the reference device associated with the new user terminal allowed for the access.

Although FIG. 12 shows an access procedure of a user terminal for controlling an electronic device in the IoT system, but the one or more embodiments of FIG. 12 will be equally applied to an access procedure of an electronic device to be controlled in the IoT system.

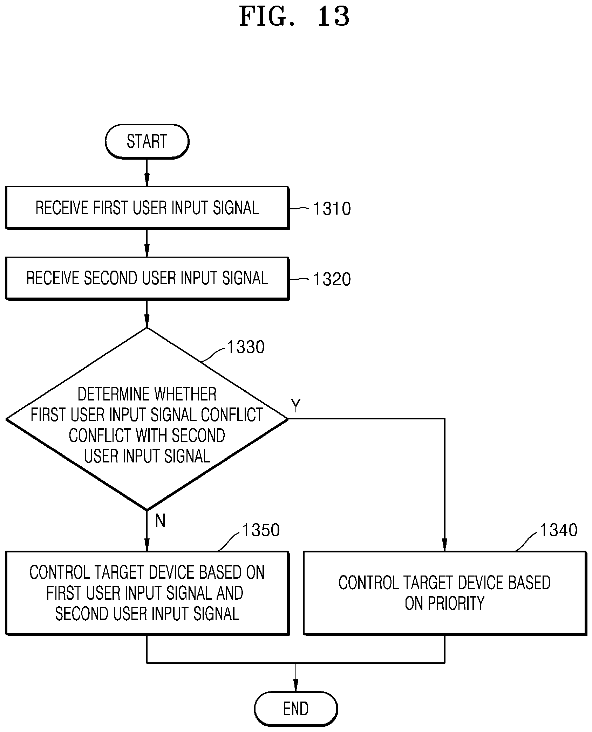

FIG. 13 is a flowchart illustrating a method of controlling a target device based on determining that a plurality of user input signals conflict with one another, according to an embodiment of the present disclosure.

In operation 1310, the computing device may receive a first user input signal from a first user terminal. In operation 1320, the computing device may receive a second user input signal from a second user terminal which is different from the first user terminal. Although the computing device is illustrated in FIG. 13 as receiving the first user input signal and then receiving the second user input signal, it is not limited thereto. For example, the computing device may receive the first user input signal and the second user input signal at the same time.

In operation 1330, the computing device may determine whether the first user input signal conflicts with the second user input signal. For example, conflicting between the first user input signal and the second user input signal may refer to a command corresponding to the first user input signal conflicting with a command corresponding to the second user input signal. In an embodiment of the present disclosure, the computing device may determine whether control according to the first user input signal conflicts with control according to the second user input signal.

Specifically, the computing device may identify a target device with respect to the first user input device and a target device with respect to the second user input device. In an embodiment of the present disclosure, when the target device with respect to the first user input device is different from the target device with respect to the second user input device, the computing device may determine that the first user input signal does not conflict with the second user input signal. For example, when the target device to be controlled according to the first user input device is different from the target device to be controlled according to the second user input device, the computing device may determine that the first user input signal does not conflict with the second user input signal.

In an embodiment of the present disclosure, when the target device with respect to the first user input signal is equal to the target device with respect to the second user input signal, the computing device may determine whether the first user input signal and the second user input signal correspond with conflicting control purposes and/or control results. For example, when the control purposes and/or control results of the first user input signal and the second user input signal conflict for the same target device, the computing device may determine that the first user input signal conflicts with the second user input signal.

Additionally or alternatively, even when the target device with respect to the first user input device is different from the target device with respect to the second user input device, but the control results for the respective target devices are incompatible in the IoT system, the computing device may determine that the first user input signal conflicts with the second user input signal.

Based on determining that the first user input signal conflicts with the second user input signal, the computing device may control the target devices based on priorities between the user terminals. In an embodiment of the present disclosure, when the first user terminal has higher priority than the second user terminal, the computing device may control the target device based on the first user input signal received from the first user terminal.

For example, the computing device may receive the first user input signal corresponding to 'lower the air conditioner temperature' from the first user terminal, and receive the second user input signal corresponding to 'raise the air conditioner temperature' from the second user terminal. As the first user input signal and the second user input signal are related to the same target device, the air conditioner and correspond to the conflicting control purposes and results of raising temperature and lowering temperature, respectively, the computing device may determine that the first user input signal conflicts with the second user input signal. The computing device may control to lower the air conditioner temperature based on the first user input signal received from the first user terminal having higher priority than the second user terminal.

On the other hand, based on determining that the first user input signal does not conflict with the second user input signal, the computing device may control at least one target device based on the first user input signal and the second user input signal. In an embodiment of the present disclosure, the computing device may control the target device with respect to the first user input signal and control the target device with respect to the second user input signal. For example, the computing device may control to lower the temperature of an air conditioner based on the first user input signal and control a light to be turned on based on the second user input signal.

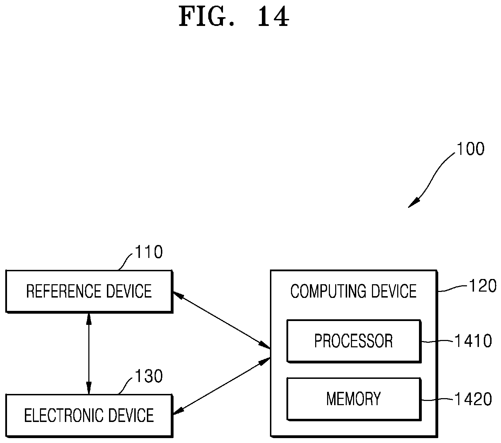

FIG. 14 is a diagram illustrating an example of a configuration of an IoT system, according to an embodiment of the present disclosure.

The IoT system 100 may include the reference device 110, the computing device 120 and the one or more electronic devices 130. The reference device 110 of FIG. 14 may refer to at least one of the first reference device or the second reference device. The one or more electronic devices 130 of FIG. 14 may refer to a device that may be controlled by the computing device 120 in the IoT system 100.

In an embodiment of the present disclosure, the reference device 110 may include one or more UWB signal antennas. For example, the one reference device 110 may include two UWB signal antennas. A distance between the two UWB signal antennas may be half the wavelength of a signal (d = λ/2). This feature may be used to measure the AoA of an arbitrary electronic device to the reference device 110. The two antennas may be directional antennas that receive UWB signals in one direction only.

Although the reference device 110 is shown in FIG. 14 as communicating directly with the computing device 120, it is not limited thereto. For example, the reference device 110 may communicate with the computing device 120 through a user terminal associated with the reference device 110. In other words, the reference device 110 may provide data, information, requests, commands and signals to the computing device 120 or receive them from the computing device 120 through the user terminal associated with the reference device 110. For example, the user terminal may include a smart phone, a cell phone, a navigation terminal, a desktop computer, a laptop computer, a distal broadcast terminal, a personal digital assistant (PDA), a portable multimedia player (PMP), a tablet computer, a wearable device, a virtual reality (VR) device, an augmented reality (AR) device, etc., without being limited thereto.

The one or more electronic devices 130 may transmit or receive UWB signals. For this, the one or more electronic devices 130 may include one or more UWB signal antennas. For example, the reference device 110 and the one or more electronic devices 130 may transmit or receive UWB signals to or from each other. The one or more electronic devices 130 may further include a configuration for communicating with the computing device 120. Furthermore, the one or more electronic devices 130 may further include components for processing the received signals and performing an operation.

The computing device 120 may include one or more servers (e.g., an IoT server). Referring to FIG. 14, the computing device 120 may include at least one processor 1410 and a memory 1420.

The processor 1410 may be electrically connected to the components included in the computing device 120 to perform calculation or data processing for controlling and/or communicating of the components included in the computing device 120. In an embodiment of the present disclosure, the processor 1410 may load the request, command or data received from at least one of the other components onto the memory 1420, process it, and store a resultant data in the memory 1420. In various embodiments, the processor 1410 may include at least one of a central processing unit (CPU), an application processor (AP), a graphic processing unit (GPU) or a neural processing unit (NPU).

The memory 1420 may be electrically connected to the processor 1410, and may store one or more modules, programs, instructions or data related to operations of the components included in the computing device 120. The memory 1420 may include at least one type of storage medium including a flash memory, a hard disk, a multimedia card micro type memory, a card type memory (e.g., SD or XD memory), a random access memory (RAM), a static random access memory (SRAM), a read-only memory (ROM), an electrically erasable programmable read-only memory (EEPROM), a programmable ROM (PROM), a magnetic memory, a magnetic disk, or an optical disk.

The components of the computing device 120 are not limited to what is shown in FIG. 14, and may further include a component not shown in FIG. 14. For example, the computing device 120 may further include an input device, an output device, an input/output interface, a communication interface, etc.

The communication interface may support establishment of a wired or wireless communication channel between the user terminal, the one or more electronic devices 130, the reference device 110 and/or an external server (hereinafter, the user terminal) and the computing device 120 and communication on the established communication channel. In an embodiment of the present disclosure, the communication interface may receive data from the user terminal through wired communication or wireless communication. Furthermore, the communication interface may transmit data to the user terminal.

In various embodiments, the communication interface may include a wireless communication module (e.g., a cellular communication module, a short-range communication module, or a global navigation satellite system (GNSS) communication module) or a wired communication module (e.g., a local area network (LAN) communication module or a power line communication module), and use one of the communication modules to communicate with the external electronic device or the server over at least one network, e.g., a short-range communication network (e.g., Bluetooth, Wi-Fi direct, or infrared data association (IrDA) or a long-range communication network (e.g., a cellular network, the Internet, or a computer network (e.g., a LAN or WAN). The network may be configured as a wired network (e.g., Ethernet, a wired home network (power line communication), telephone line communication, RS-serial communication, etc.), a wireless network (e.g., a mobile communication network, a wireless LAN (WLAN), Wi-Fi, etc.), or a combination thereof.

Although the computing device, the target device and the reference device are shown in FIG. 14 as separate devices, it is not limited thereto. For example, at least some of the computing device, the target device or the reference device may be one same device or may constitute a single device. For example, at least one of the computing device, the target device or the reference device may be included or embedded in the other device.

The one or more embodiments in connection with FIGS. 1 to 14 may be applied to other drawings, and overlapping descriptions are be omitted. Furthermore, the one or more embodiments described in FIGS. 1 to 14 may be combined with one another.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the present disclosure, the aforementioned method according to the various embodiments of the disclosure may be provided in a computer program product. The computer program product may be a commercial product that may be traded between a seller and a buyer. The computer program product may be distributed in the form of a machine-readable storage medium (e.g., a CD-ROM) or distributed directly between two reference devices (e.g., smart phones) or online (e.g., downloaded or uploaded). In the case of the online distribution, at least part of the computer program product (e.g., a downloadable app) may be at least temporarily stored or arbitrarily created in a storage medium that may be readable to a device such as a server of the manufacturer, a server of the application store, or a relay server.

According to an embodiment of the present disclosure, a method of controlling a target device by a computing device may include identifying a distance difference between a distance to a first reference device and a distance to a second reference device from one or more electronic devices. In an embodiment of the present disclosure, the method may include identifying an angle difference between an angle of arrival of the one or more electronic devices to at least one of the first reference device or the second reference device and a reference angle of arrival. In an embodiment of the disclosure, the method may include controlling the target device based on at least one of the distance difference or the angle difference.

In an embodiment of the present disclosure, the method may include comparing the distance differences of the one or more electronic devices with the first threshold. In an embodiment of the present disclosure, the method may include comparing the angle differences of the one or more electronic devices with the second threshold.

In an embodiment of the present disclosure, the method may include receiving a user input signal. In an embodiment of the present disclosure, the method may include identifying the one or more electronic devices associated with the received user input signal. In an embodiment of the present disclosure, the method may include determining the target device from among the one or more electronic devices.

In an embodiment of the disclosure, the method may include determining the target device from the one or more electronic devices based on determining that the distance difference of the one or more electronic devices is smaller than the first threshold and the angle difference is smaller than the second threshold. In an embodiment of the present disclosure, even when the user may not remember an identifier of each electronic device, the user is able to control an electronic device to be controlled only by gazing at the electronic device and uttering an instruction. Furthermore, the user may control the electronic device only by uttering a short instruction that does not include the device identifier.

In an embodiment of the present disclosure, the method may include determining one of the one or more electronic devices, which is at a nearest distance to at least one of the first reference device or the second reference device, as the target device.

In an embodiment of the present disclosure, the method may include determining the target device from among the one or more electronic devices based on a value of the user input signal.

In an embodiment of the present disclosure, the method may include determining one of the one or more electronic devices, which has a smallest angle difference, as a target device, based on determining that the one or more electronic devices have the distance difference equal to or larger than the first threshold or the angle difference equal to or larger than the second threshold.

In an embodiment of the present disclosure, the one or more electronic devices may be electronic devices having the distance difference smaller than the first threshold. In an embodiment of the present disclosure, the method may include determining one of the one or more electronic devices, which has a smallest angle difference, as a target device, based on determining that all the angle differences of the one or more electronic devices being equal to or larger than the second threshold.

In an embodiment of the present disclosure, the method may include updating the reference angle of arrival (AoA) based on an AoA of the target device to at least one of the first reference device or the second reference device.

In an embodiment of the present disclosure, the method may include controlling the target device to output information associated with the one or more electronic devices based on determining that the distance difference is smaller than the first threshold and the angle difference is smaller than the second threshold.

In an embodiment of the present disclosure, the method may include controlling the target device to output guide information for positions of the one or more electronic devices based on determining that the distance difference is equal to or larger than the first threshold or the angle difference is equal to or larger than the second threshold. In an embodiment of the present disclosure, the guide information may include at least one of first movement information for reducing the distance difference or second movement information for reducing the angle difference.

In an embodiment of the present disclosure, the method may include determining whether the target device is located in a reference position based on at least one of the distance difference or the angle difference.

In an embodiment of the present disclosure, the method may include controlling the target device to perform an operation of moving to an aimed position, based on determining that the target device is located in the reference position.

In an embodiment of the present disclosure, the method may include controlling the target device to perform an operation of moving to the reference position, based on determining that the target device is located in a position other than the reference position.

In an embodiment of the present disclosure, the method may include receiving a user input signal requesting system activation. In an embodiment of the present disclosure, the method may include determining the one or more electronic devices as the target device, based on determining that the distance difference of the one or more electronic devices is smaller than the first threshold and the angle difference is smaller than the second threshold. In an embodiment of the present disclosure, the method may include controlling the target device to output a notification.

In an embodiment of the present disclosure, the method may include receiving a system access request for a user terminal associated with the first reference device and the second reference device. In an embodiment of the present disclosure, the method may include determining priority of the user terminal over the other user terminal. In an embodiment of the present disclosure, even a new user who is not aware of an identifier of each electronic device in an IoT space may also control the electronic device. For example, a user such as a hotel guest who visits the IoT space is also able to control an electronic device to be controlled by gazing the electronic device and uttering an instruction.

In an embodiment of the present disclosure, the method may include receiving a user input signal associated with the user terminal. In an embodiment of the present disclosure, the method may include receiving a user input signal associated with the other user terminal. In an embodiment of the present disclosure, the method may include controlling the target device based on the determined priority, based on determining that the user input signal associated with the user terminal conflicts with the user input signal associated with the other user terminal.

In an embodiment of the present disclosure, the first reference device and the second reference device may be devices capable of transmitting and receiving UWB signals. In an embodiment of the present disclosure, based on information about UWB signals transmitted and received between an electronic device and a reference device, whether the electronic device is located in a user gaze direction may be determined. In other words, the computing device does not have to identify a position of the reference device (i.e., the user) or a position of the electronic device in an IoT system space in real time with the use of an extra camera. Hence, an embodiment of the present disclosure may be applied even to security or a private space. In an embodiment of the present disclosure, whether even a moving electronic device is located in the user gaze direction may be determined, so the user may easily control the moving electronic device.

According to an embodiment of the present disclosure, a program for performing a method of controlling a target device in a computer may be recorded on a computer-readable recording medium.

According to an embodiment of the present disclosure, a computing device for controlling a target device may include a memory storing one or more instructions and at least one processor configured to execute the one or more instructions stored in the memory. In an embodiment of the present disclosure, the at least one processor may be configured to execute the one or more instructions to identify a distance difference between a distance to a first reference device and a distance to a second reference device from one or more electronic devices. In an embodiment of the present disclosure, the at least one processor may be configured to execute the one or more instructions to identify an angle difference between an angle of arrival of the one or more electronic devices to at least one of the first reference device or the second reference device and a reference angle of arrival. In an embodiment of the present disclosure, the at least one processor may be configured to execute the one or more instructions to control the target device based on at least one of the distance difference or the angle difference.

In an embodiment of the present disclosure, the at least one processor may execute the one or more instructions to compare the distance differences of the one or more electronic devices with a first threshold. In an embodiment of the present disclosure, the at least one processor may be configured to execute the one or more instructions to compare the angle differences of the one or more electronic devices with a second threshold.

In an embodiment of the present disclosure, the at least one processor may be configured to execute the one or more instructions to receive a user input signal. In an embodiment of the present disclosure, the at least one processor may be configured to execute the one or more instructions to identify the one or more electronic devices associated with the received user input signal. In an embodiment of the present disclosure, the at least one processor may be configured to execute the one or more instructions to determine the target device from among the one or more electronic devices.

In an embodiment of the disclosure, the at least one processor may be configured to execute the one or more instructions to determine the target device from the one or more electronic devices based on determining that the distance difference of the one or more electronic devices is smaller than the first threshold and the angle difference is smaller than the second threshold.

In an embodiment of the present disclosure, the at least one processor may be configured to execute the one or more instructions to determine one of the one or more electronic devices, which is at a nearest distance to at least one of the first reference device or the second reference device, as the target device.

In an embodiment of the present disclosure, the at least one processor may be configured to execute the one or more instructions to determine the target device from among the one or more electronic devices based on a value of the user input signal.

In an embodiment of the present disclosure, the at least one processor may be configured to execute the one or more instructions to determine one of the one or more electronic devices, which has a smallest angle difference, as a target device, based on determining that the one or more electronic devices have the distance difference equal to or larger than the first threshold or the angle difference equal to or larger than the second threshold.

In an embodiment of the present disclosure, the one or more electronic devices may be electronic devices having the distance difference smaller than the first threshold. In an embodiment of the present disclosure, the at least one processor may be configured to execute the one or more instructions to determine one of the one or more electronic devices, which has a smallest angle difference, as a target device, based on determining that all the angle differences of the one or more electronic devices being equal to or larger than the second threshold.

In an embodiment of the present disclosure, the at least one processor may be configured to execute the one or more instructions to update the reference angle of arrival based on an angle of arrival of the target device to at least one of the first reference device or the second reference device.

In an embodiment of the present disclosure, the at least one processor may be configured to execute the one or more instructions to control the target device to output information associated with the one or more electronic devices based on determining that the distance difference is smaller than the first threshold and the angle difference is smaller than the second threshold.

In an embodiment of the present disclosure, the at least one processor may be configured to execute the one or more instructions to control the target device to output guide information for positions of the one or more electronic devices based on determining that the distance difference is equal to or larger than the first threshold or the angle difference is equal to or larger than the second threshold. In an embodiment of the present disclosure, the guide information may include at least one of first movement information for reducing the distance difference or second movement information for reducing the angle difference.

In an embodiment of the present disclosure, the at least one processor may be configured to execute the one or more instructions to determine whether the target device is located in a reference position based on at least one of the distance difference or the angle difference.

In an embodiment of the present disclosure, the at least one processor may be configured to execute the one or more instructions to control the target device to perform an operation of moving to an aimed position, based on determining that the target device is located in the reference position.

In an embodiment of the present disclosure, the at least one processor may be configured to execute the one or more instructions to control the target device to perform an operation of moving to the reference position, based on determining that the target device is located in a position other than the reference position.

In an embodiment of the present disclosure, the at least one processor may be configured to execute the one or more instructions to receive a user input signal requesting system activation. In an embodiment of the disclosure, the at least one processor may be configured to execute the one or more instructions to determine the one or more electronic devices as the target device based on determining that the distance difference of the one or more electronic devices is smaller than the first threshold and the angle difference is smaller than the second threshold. In an embodiment of the present disclosure, the at least one processor may be configured to execute the one or more instructions to control the target device to output a notification.

In an embodiment of the present disclosure, the at least one processor may be configured to execute the one or more instructions to receive a system access request for a user terminal associated with the first reference device and the second reference device. In an embodiment of the present disclosure, the at least one processor may be configured to execute the one or more instructions to determine priority of the user terminal over the other user terminal.

In an embodiment of the present disclosure, the at least one processor may be configured to execute the one or more instructions to receive a user input signal associated with the user terminal. In an embodiment of the present disclosure, the at least one processor may be configured to execute the one or more instructions to receive a user input signal associated with the other user terminal. In an embodiment of the present disclosure, the at least one processor may be configured to execute the one or more instructions to control the target device based on the determined priority, based on determining that the user input signal associated with the user terminal conflicts with the user input signal associated with the other user terminal.

## Claims

1. A method of controlling a target device by a computing device (120), the method comprising:
identifying a distance difference between a distance to a first reference device (110; 401; 1064) and a distance to a second reference device (1110; 402; 1066) from one or more electronic devices (130; 403; 404; 405; 860; 1082; 1084);
identifying an angle difference between an angle of arrival (AoA) of the one or more electronic devices (130; 403; 404; 405; 860; 1082; 1084) to at least one of the first reference device (110; 401; 1064) or the second reference device (110; 402; 1066) and a reference AoA; and
controlling the target device based on at least one of the distance difference or the angle difference.

2. The method of claim 1, further comprising:
comparing the distance difference of the one or more electronic devices (130; 403; 404; 405; 860; 1082; 1084) with a first threshold; and
comparing the angle difference of the one or more electronic devices (130; 403; 404; 405; 860; 1082; 1084) with a second threshold.

3. The method of claim 1 or 2, further comprising:
receiving a user input signal; and
identifying the one or more electronic devices (130; 403; 404; 405; 860; 1082; 1084) associated with the received user input signal,
wherein the controlling of the target device based on the at least one of the distance difference or the angle difference comprises determining the target device from among the one or more electronic devices (130; 403; 404; 405; 860; 1082; 1084).

4. The method of claim 3, wherein the determining of the target device from among the one or more electronic devices (130; 403; 404; 405; 860; 1082; 1084) comprises determining the target device from among the one or more electronic devices (130; 403; 404; 405; 860; 1082; 1084) based on determining that the distance difference of the one or more electronic devices (130; 403; 404; 405; 860; 1082; 1084) is smaller than the first threshold and that the angle difference is smaller than the second threshold.

5. The method of claim 4, wherein the determining of the target device from among the one or more electronic devices (130; 403; 404; 405; 860; 1082; 1084) comprises determining one of the one or more electronic devices (130; 403; 404; 405; 860; 1082; 1084), which is at a nearest distance to at least one of the first reference device (110; 401; 1064) or the second reference device (110; 402; 1066), as the target device.

6. The method of claim 4 or 5, wherein the determining of the target device from among the one or more electronic devices (130; 403; 404; 405; 860; 1082; 1084) comprises determining the target device from among the one or more electronic devices (130; 403; 404; 405; 860; 1082; 1084) based on a value of the user input signal.

7. The method of any of claims 3 to 6, wherein the determining of the target device from among the one or more electronic devices (130; 403; 404; 405; 860; 1082; 1084) comprises determining one of the one or more electronic devices (130; 403; 404; 405; 860; 1082; 1084), which has a smallest angle difference, as a target device, based on determining that the one or more electronic devices (130; 403; 404; 405; 860; 1082; 1084) have the distance difference equal to or larger than the first threshold or the angle difference equal to or larger than the second threshold.

8. The method of any of claims 3 to 7, wherein the one or more electronic
devices (130; 403; 404; 405; 860; 1082; 1084) are electronic devices having the distance difference smaller than the first threshold, and
the determining of the target device from among the one or more electronic devices (130; 403; 404; 405; 860; 1082; 1084) comprises determining one of the one or more electronic devices (130; 403; 404; 405; 860; 1082; 1084), which has a smallest angle difference, as a target device, based on determining that all the angle differences of the one or more electronic devices (130; 403; 404; 405; 860; 1082; 1084) are equal to or larger than the second threshold.

9. The method of any of claims 1 to 8, further comprising:
updating the reference AoA based on an AoA of the target device to at least one of the first reference device (110; 401; 1064) or the second reference device (110; 402; 1066).

10. The method of any of claims 1 to 9, wherein the controlling of the target device based on the at least one of the distance difference or the angle difference comprises based on determining that the distance difference is smaller than the first threshold and the angle difference is smaller than the second threshold, controlling the target device (850) to output information (870) associated with the one or more electronic devices (130; 403; 404; 405; 860; 1082; 1084).

11. The method of any of claims 1 to 10, wherein the controlling of the target device based on the at least one of the distance difference or the angle difference comprises, based on determining that the distance difference is equal to or larger than the first threshold or that the angle difference is equal to or larger than the second threshold, controlling the target device to output guide information for positions of the one or more electronic devices (130; 403; 404; 405; 860; 1082; 1084), and
the guide information comprises at least one of first movement information for reducing the distance difference or second movement information for reducing the angle difference.

12. The method of any of claims 1 to 11, wherein the controlling of the target device based on the at least one of the distance difference or the angle difference comprises determining whether the target device (1062) is located in a reference position (1070) based on at least one of the distance difference or the angle difference.

13. The method of any of claims 1 to 12, wherein the controlling of the target device based on the at least one of the distance difference or the angle difference further comprises:
based on determining that the target device (1062) is located in the reference position (1070), controlling the target device (1062) to perform an operation of moving to an aimed position (1080); or
based on determining that the target device (1062) is located in a position other than the reference position (1070), controlling the target device (1062) to perform an operation of moving to the reference position (1070).

14. The method of any of claims 1 to 13, further comprising receiving a user input signal requesting system activation,
wherein the controlling of the target device based on the at least one of the distance difference or the angle difference comprises
determining the one or more electronic devices (130; 403; 404; 405; 860; 1082; 1084) as the target device based on determining that the distance difference of the one or more electronic devices (130; 403; 404; 405; 860; 1082; 1084) is smaller than the first threshold and that the angle difference is smaller than the second threshold; and
controlling the target device to output a notification.

15. A computing device (120) for controlling a target device, the computing device (120) comprising:
a memory (1420) storing one or more instructions; and
at least one processor (1410) configured to execute the one or more instructions stored in the memory (1420),
wherein the at least one processor (1410) is configured to execute the one or more instructions to:
identify a distance difference between a distance to a first reference device (110; 401; 1064) and a distance to a second reference device (110; 402; 1066) from one or more electronic devices (130; 403; 404; 405; 860; 1082; 1084);
identify an angle difference between an angle of arrival (AoA) of the one or more electronic devices (130; 403; 404; 405; 860; 1082; 1084) to at least one of the first reference device (110; 401; 1064) or the second reference device (110; 402; 1066) and a reference AoA; and
control the target device based on at least one of the distance difference and the angle difference.
